# EUROPÄISCHE PATENTSCHRIFT

(11) **EP 0 743 148 B1**
(45) Veröffentlichungstag und Bekanntmachung des Hinweises auf die Patenterteilung: **02.10.2002**
(21) Anmeldenummer: 96105205.7
(22) Anmeldetag: 01.04.1996
(51) Int. Cl.: B27L 11/02, B23Q 3/157, G05B 19/4065

(54) **Verfahren und Vorrichtung zum automatischen Auswechseln von kranzförmigen Zerkleinerungswerkzeugen an Zerkleinerungsmaschinen, insbesondere von Messerkränzen für Holzzerspanmaschinen**
Method and device for automatically exchanging ring shaped chipping tools on chipping machines, in particular for cutter rings for woodworking machines
Dispositif et procédé pour changement automatique de couteaux en forme de couronne sur des machines à broyer, en particulier pour couronnes à trancher pour déchiqueteur à bois

(30) Priorität: 19.05.1995 DE 19518354
(43) Veröffentlichungstag der Anmeldung: 20.11.1996
(73) Patentinhaber: PALLMANN MASCHINENFABRIK GMBH + CO. KG, D-66482 Zweibrücken (DE)
(72) Erfinder: Pallmann, Wilhelm, 66482 Zweibrücken (DE)
(74) Vertreter: Patentanwälte Möll und Bitterich

(56) Entgegenhaltungen:
- EP-A- 0 128 266
- EP-A- 0 165 745
- DE-A- 2 334 151
- DE-A- 2 628 773
- DE-A- 2 714 575
- US-A- 4 593 862
- US-A- 5 313 696

## Beschreibung

Die Erfindung betrifft ein Verfahren und eine Vorrichtung zum Auswechseln kranzförmiger Zerkleinerungswerkzeuge von Zerkleinerungsmaschinen, insbesondere für Messerkränze von Holzzerspanern.

Die wirksamen Kanten von kranzförmigen Zerkleinerungswerkzeugen, wie Messerkränze, Mahl- und Siebbahnen, unterliegen in aller Regel einem starken Verschleiß, der in relativ kurzen Zeitabständen das Auswechseln der Werkzeuge gegen solche mit scharfen oder nachgeschärften Kanten notwendig macht. Da das Auswechseln einen zeitweiligen Stillstand der Zerkleinerungsmaschinen bedingt und somit einen entsprechenden Produktionsausfall zur Folge hat, gehen schon seit langem Bestrebungen in die Richtung, den Messerwechsel ohne bzw. mit möglichst kurzen Stillstandszeiten der Zerkleinerungsmaschinen durchzuführen.

Ein in diesem Sinne bereits beschrittener Lösungsansatz ist aus der EP 0 128 266 A1 bekannt. Dort werden die verbrauchten Messer eines stationären Messerrings während des Betriebs kontinuierlich oder taktweise parallel zur Drehachse des Messerrings durch neue Messer ersetzt, wobei der Vorschub der Messer energieverbrauchsabhängig gesteuert sein kann. Das Auswechseln der Messer erfolgt also an einem Messerring in eingebautem Zustand, wobei dieses Verfahren auf Zerkleinerungsmaschinen mit feststehendem Messerring beschränkt ist.

Um auch an rotierenden Messerkränzen die Zerkleinerungswerkzeuge rationell austauschen zu können, ist es aus der DE-PS 27 14 575 C2 bereits bekannt, bei kranzförmig angeordneten Zerkleinerungswerkzeugen den kompakten Werkzeugkranz auszutauschen, wobei zur Erleichterung und Beschleunigung des Austausches im unteren Bereich des Maschinengehäuses ein Schubschlitten vorgesehen ist, dessen beide achsparallele Tragstangen den verschlissenen Werkzeugkranz nach Lösen von seinem Tragelement aufnehmen, ihn bei geöffneter Gehäusetür in Achsrichtung aus dem Maschinengehäuse ausschieben und anschließend den dafür eingetauschten Werkzeugkranz in umgekehrter Richtung in das Maschinengehäuse einschieben, wo er dann an seinem im Maschinengehäuse gelagerten Tragelement erneut befestigt wird.

Diese bekannte Austauschmethode hat indes außer der hierfür noch erforderlichen zeitaufwendigen Handarbeit vor allem den Nachteil, daß die Notwendigkeit eines Werkzeugwechsels in das subjektive Ermessen des Wartungspersonals gestellt, also nicht an objektiven Verschleißkriterien orientiert ist.

Zwecks Reduzierung der beim Werkzeugwechsel aufzuwendenden Handarbeit ist es aus der DE 38 27 592 C1 bereits bekannt, bei Trommelschneidmaschinen für Zuckerrüben die auf einer Messertrommel kranzförmig angeordneten Messerkassetten einzeln mittels einer mechanischen Hilfseinrichtung auszuwechseln. Hierbei kann, wie überdies aus der DE 37 24 171 A1 hervorgeht, das jeweilige Befestigen und Lösen der einzelnen Messerkassetten an der Messertrommel mittels ihnen zugeordneter, teilweise selbsttätig funktionierender Riegeleinrichtungen erfolgen.

Da der rasche Verschleiß der wirksamen Kanten von Zerkleinerungswerkzeugen zum einen eine spürbare Verschlechterung der Qualität des Zerkleinerungsproduktes zur Folge hat, zum anderen aber auch mit einer beträchtlichen Zunahme der für die Zerkleinerungsarbeit aufzuwendenden Energie einhergeht, wird bei Übergehen eines notwendig gewordenen Werkzeugwechsels nicht nur ein minderwertiges zerkleinertes Produkt erzeugt, sondern überdies auch unnötig viel kostbare Energie vergeudet.

Besonders deutlich treten diese Nachteile der bekannten Austauschmethode bei Messerkranzzerspanern zutage, wo die bei stumpf gewordenen Messerschneiden erzeugten Späne nicht mehr den hohen Qualitätsanforderungen genügen, wie sie heutzutage von der weiterverarbeitenden Industrie gefordert werden.

Der Erfindung liegt daher die Aufgabe zugrunde, bei Zerkleinerungsmaschinen einen Betriebsablauf zu ermöglichen, der bei konstantem optimalem Energieaufwand ein gleichbleibend hochwertiges Zerkleinerungsprodukt gewährleistet, was konkret darauf hinausläuft, die Notwendigkeit eines Werkzeugwechsels nach objektiven Verschleißkriterien zu erkennen und ihn aufgrund dieser Erkenntnis vollautomatisch, also ohne jegliche Mitwirkung des Wartungspersonals sowie ohne nennenswerten Produktionsausfall durchzuführen.

Diese Aufgabe wird ausgehend von dem in der DE-PS 27 14 575 C₂ dokumentierten einschlägigen Stand der Technik erfindungs-gemäß durch die Merkmale des Anspruchs 1 gelöst.

In Ausgestaltung der Erfindung wird gemäß Anspruch 2 der aus der Zerkleinerungsmaschine ausgeschobene, verschlissene Werkzeugkranz von einem Förderelement selbsttätig erfaßt, das ihn selbsttätig in einen separaten Raum zur selbsttätigen Erneuerung seiner wirksamen Kanten transportiert.

Bei einer weiteren Ausgestaltung der Erfindung ist gemäß Anspruch 3 vorgesehen, während der Auslaufphase der Zerkleinerungsmaschine die Zerkleinerungswerkzeuge durch Druckmedien selbsttätig zu reinigen.

Elementare Voraussetzung für die Durchführung des in den Verfahrensansprüchen gekennzeichneten automatischen Betriebsablaufes war die befriedigende Lösung des Schlüsselproblems der selbsttätigen An- und Abkopplung des Werkzeugkranzes an sein bzw. von seinem im Maschinengehäuse gelagerten Tragelement. Dieses Problem ist erfindungsgemäß durch die Merkmale des Anspruchs 4 einwandfrei gelöst und dadurch die Möglichkeit für einen vollautomatischen Betriebsablauf eröffnet.

Diese Koppelungseinrichtung besteht erfindungsgemäß aus mehreren über den Umfang eines Werkzeugkranzes verteilte Riegelmechanismen, die ein selbsttätiges, schlagartiges An- und Abkoppeln des Werkzeugkranzes an sein bzw. von seinem Tragelement ermöglichen. Dabei ist es gegenüber den bisher üblichen Schraubverbindungen zusätzlich von besonderem Vorteil, daß die Verbundkräfte am Werkzeugkranz an mehreren, z.B. an drei Stellen seines Umfanges gleichzeitig und gleichmäßig angreifen, so daß ein Verspannen seines Verbindungsflansches ausgeschlossen ist.

Ein besonders fester Verbund zwischen einem Werkzeugkranz und seinem Tragelement kommt erfindungsgemäß dadurch zustande, daß gemäß Anspruch 5 die Riegelelemente mit zusammenwirkenden Keilflächen versehen sind.

Weitere vorteilhafte Ausgestaltungen der Erfindung ergeben sich aus den Ansprüchen 6 und 7, wonach besondere bauliche Maßnahmen zum Abdrücken eines Werkzeugkranzes von seinem Tragelement in die Riegelmechanismen integriert sind, so daß erfindungsgemäß das Abdrücken eines Werkzeugkranzes ebenfalls an mehreren seiner Umfangsstellen gleichzeitig und gleichmäßig erfolgt.

Die übrigen baulichen Maßnahmen zur Durchführung des erfindungsgemäß vollautomatisch ablaufenden Austauschverfahrens für Werkzeugkränze liegen hingegen im Rahmen des fachlichen Könnens eines Durchschnittskonstrukteurs.

Weitere Einzelheiten der Erfindung ergeben sich aus den zeichnerisch dargestellten und erläuterten Ausführungsbeispielen, die den speziellen Fall eines rotierbaren Messerkranzes für Holzzerspanmaschinen betreffen.

Es zeigt:
- Fig. 1: eine Zerspanmaschine im Axialschnitt mit an die rotierbare Tragscheibe angekoppeltem Messerkranz;
- Fig. 2: eine Rückansicht der Zerspanmaschine mit teilweise aufgebrochener Gehäuserückwand;
- Fig. 3: eine erfindungsgemäß gestaltete Koppelungseinrichtung in größerem Maßstab im verriegeltem Zustand;
- Fig. 4: die gleiche Einrichtung im entriegelten Zustand;
- Fig. 5: eine andere Koppelungseinrichtung gemäß der Erfindung im ebenfalls entriegelten Zustand;
- Fig. 6: die Zerspanmaschine im Axialschnitt in etwas kleinerem Maßstab mit ausgeschobenem Messerkranz.

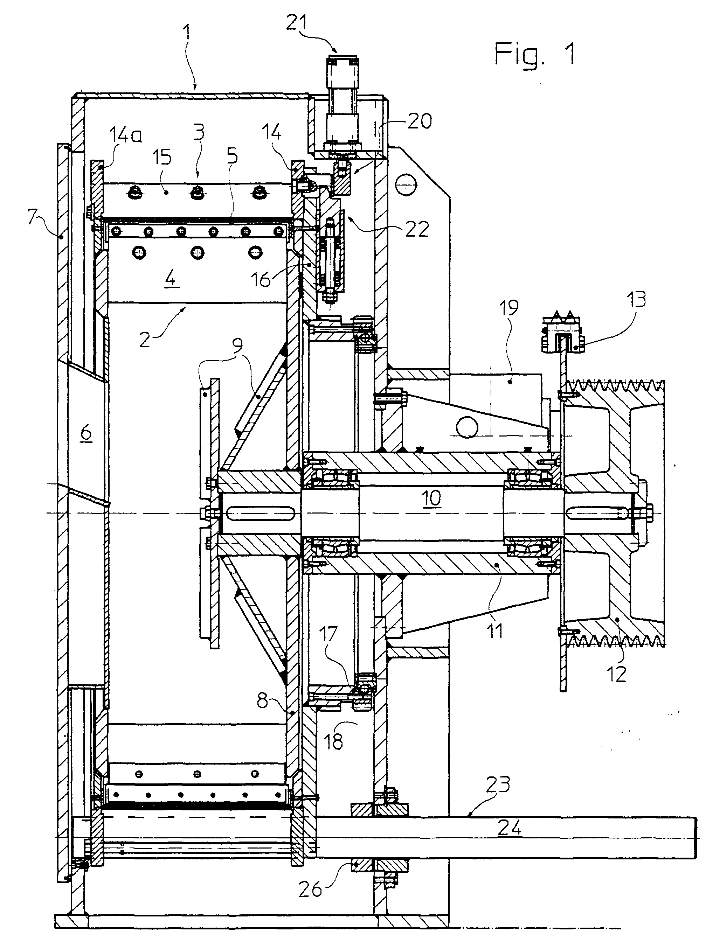

Die in Fig. 1 dargestellte Zerspanmaschine besteht im wesentlichen aus einem Maschinengehäuse 1, in dem ein Leitschaufelrotor 2 und ein rotierbarer Messerkranz 3 untergebracht sind.

Der Leitschaufelrotor 2 ist mit mehreren über den Umfang verteilten Leitschaufeln 4 bestückt, durch die in das Gehäuse 1 eingespeiste Hackschnitzel den Messern 5 des Messerkranzes 3 mit hoher Schnittgeschwindigkeit zugeleitet werden. Die Einspeisung der Hackschnitzel erfolgt mittels einer in der Gehäusetür 7 vorgesehenen Aufgabschurre 6, worauf sie von an der Nabenscheibe 8 des Leitschaufelrotors 2 angebrachten Schleuderrippen 9 gleichmäßig auf den Umfang und die Breite des Leitschaufelrotors 2 verteilt werden. Die mit der Nabenscheibe 8 des Leitschaufelrotors 2 verbundene Antriebswelle 10 ist in einem Lagergehäuse 11 gelagert. Sie ist mit einer Antriebsscheibe 12 verbunden, die mit einer Scheibenbremse 13 ausgestattet ist.

Der Messerkranz 3 besteht aus zwei Flanschringen 14, 14a, die durch mehrere über den Umfang verteilte Messerhalterungen 15 miteinander verbunden sind. Der innere Flanschring 14 dient zur Befestigung des Messerkranzes 3 an seiner Tragscheibe 16, die ihrerseits in einem Wälzlagerkranz 17 rotierbar gelagert und über einen Zahnkranz 18 von einem Winkelgetriebemotor 19 antreibbar ist.

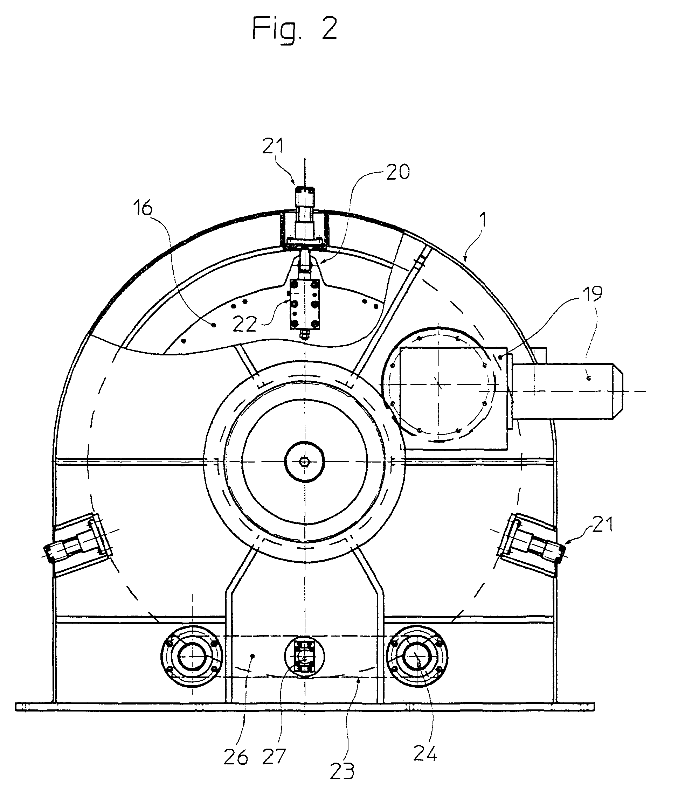

Wie aus Fig. 2 ersichtlich, sind an der Peripherie der Zerspanmaschine drei gleichmäßig verteilte, später näher erläuterte Koppelungseinrichtungen 20 angeordnet, die aus je einem stationären, am Maschinengehäuse 1 installierten Druckaggregat 21 bestehen, die bei Stillstand des Messerkranzes 3 mit je einem an seiner Tragscheibe 16 angeordneten Riegelmechanismus 22 in der später erläuterten Weise zusammenwirken.

Im unteren Bereich des Maschinengehäuses 1 ist ein in Achsrichtung verschiebbarer Schlitten 23 zum Ein- und Ausschub des Messerkranzes 3 vorgesehen, der aus zwei gleitbar gelagerten Tragstangen 24 besteht, die mit je zwei dem axialen Abstand der Flanschringe 14 und 14a entsprechenden Mitnehmernocken 25 besetzt sind. Die beiden Tragstangen 24 sind durch eine Traverse 26 miteinander verbunden, an der ein Hydraulikantrieb 27 angreift.

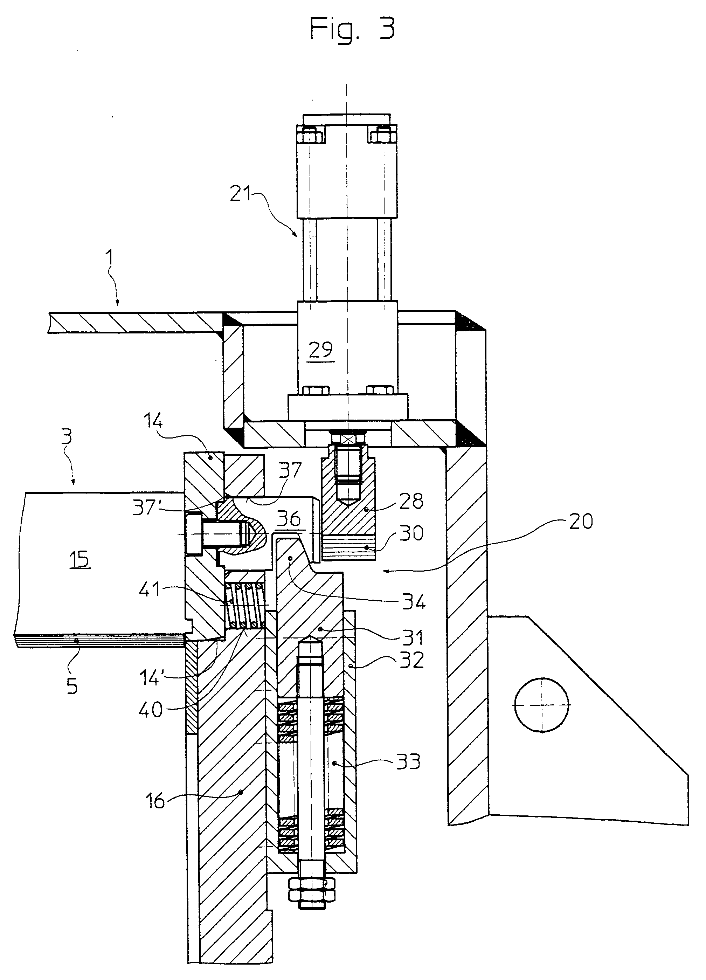

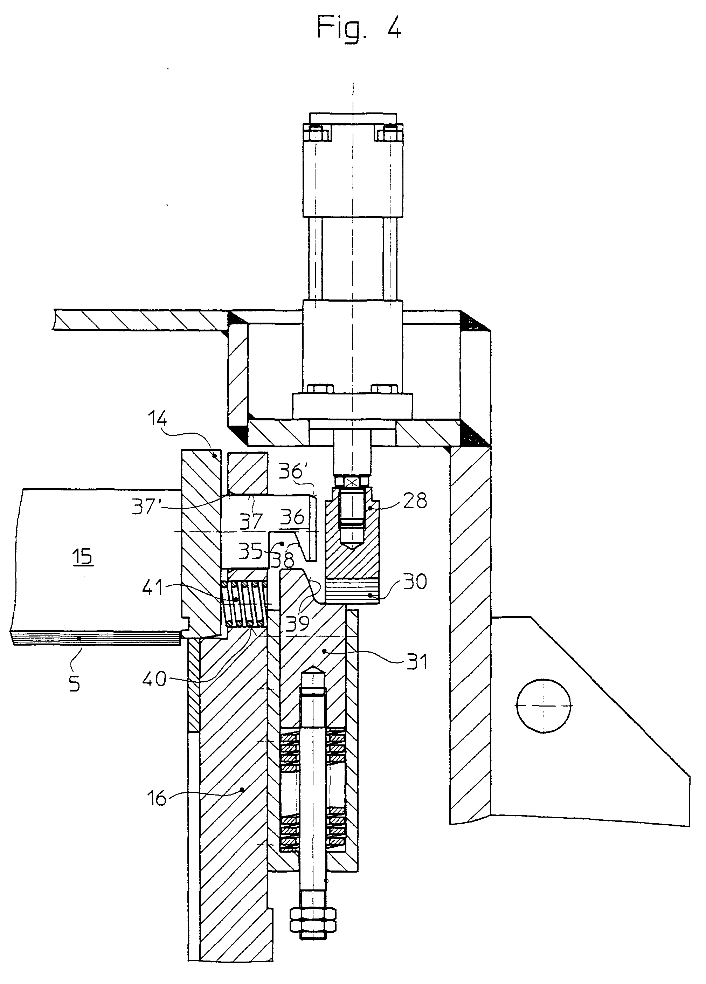

Die in den Fig. 3 und 4 in größerem Maßstab dargestellte Koppelungseinrichtung 20 besteht aus dem bereits erwähnten Druckaggregat 21, dessen Druckstempel 28 von einer Hydraulik 29 betätigbar und auf seiner Unterseite mit einem Permanentmagneten 30 besetzt ist.

Der jedem Druckaggregat 21 zugeordnete Riegelmechanismus 22 besteht aus einem Riegelkörper 31, der in einer Gleitführung 32 von einer starken Druckfeder 33 beaufschlagt ist. Er weist an seinem anderen Ende eine Riegelnase 34 auf, die in eine Riegelrast 35 eines am inneren Flanschring 14 des Messerkranzes 3 befestigten Riegelbolzen 36 einrastet, nachdem dieser eine ihm zugeordnete Bohrung 37 in der Tragscheibe 16 in Achsrichtung passiert hat.

Zwecks Erleichterung des "Einfädelns" der Riegelbolzen 36 in die ihnen in der Tragscheibe 16 zugeordneten Bohrungen 37 sind sowohl die Riegelbolzen 36 als auch die Bohrungen 37 mit entsprechenden konischen Gleitflächen 36' und 37' versehen. Dem gleichen Zweck dient auch die am inneren Flanschring 14 des Messerkranzes 3 vorgesehene konische Gleitfläche 14'.

Die Riegelrast 35 ist mit einer Keilfläche 38 versehen, die mit einer an der Riegelnase 34 vorgesehenen, korrespondierenden Keilfläche 39 in der Weise zusammenwirkt, daß sie bei der Verriegelung den Messerkranz 3 an drei Stellen seines Umfangs gleichzeitig und gleichmäßig an seine Tragscheibe 16 anpreßt.

In einer Ausnehmung 40 der Tragscheibe 16 ist eine Abdrückfeder 41 untergebracht, die auf den inneren Flanschring 14 des Messerkranzes 3 drückt und nach der Entriegelung, wie in Fig. 4 dargestellt, den Messerkranz 3 von seiner Tragscheibe 16 an drei Stellen ebenfalls gleichzeitig und gleichmäßig abdrückt.

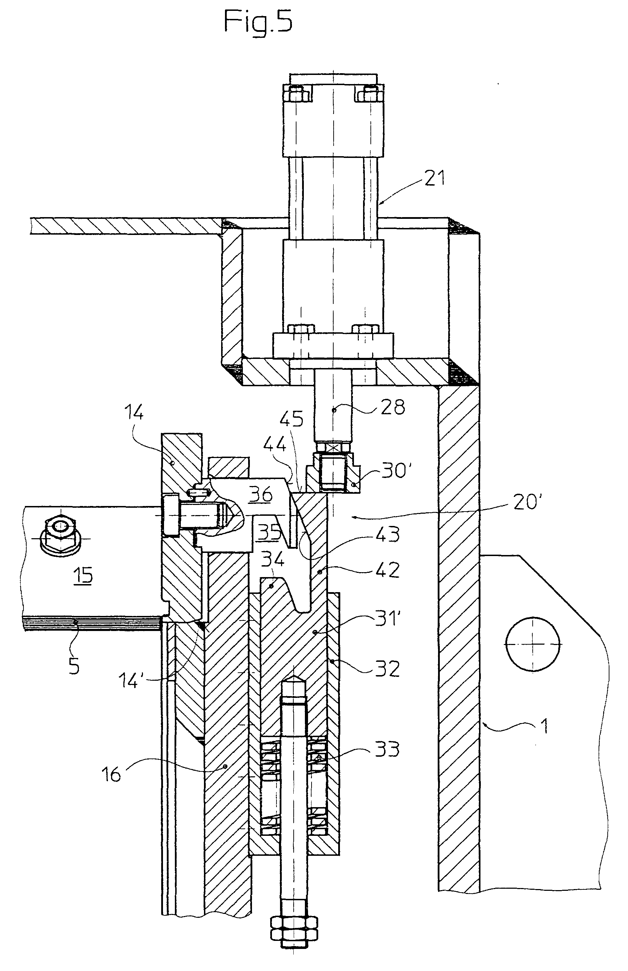

Die in Fig. 5 dargestellte Variante einer erfindungsgemäßen Koppelungseinrichtung 20' unterscheidet sich von der vorstehend beschriebenen Koppelungseinrichtung 20 lediglich durch einen andersartigen Abdrückmechanismus, der an Stelle der in die Tragscheibe 16 eingesetzten Abdrückfedern 41 an den Riegelkörpern 31' eine Abdrücknase 42 vorsieht, die über die Riegelnase 34 radial hinausragt und mit einer Schrägfläche 43 versehen ist, die mit einer an der Stirnseite des Riegelbolzens 36 vorgesehenen, korrespondierenden Schrägfläche 44 zusammenwirkt und dabei, wie aus der in Fig. 5 dargestellten Abdrückphase ersichtlich ist, den Messerkranz 3 von seiner Tragscheibe 16 an drei Stellen zugleich abdrückt, wozu die Stirnfläche 45 der Abdrücknase 42 von dem Druckstempel 28 in Radialrichtung beaufschlagbar ist.

Im übrigen zeigt Fig. 5 auch noch eine andere Ausbildungs- und Anordnungsmöglichkeit für den Permanentmagneten 30' an dem Druckstempel 28.

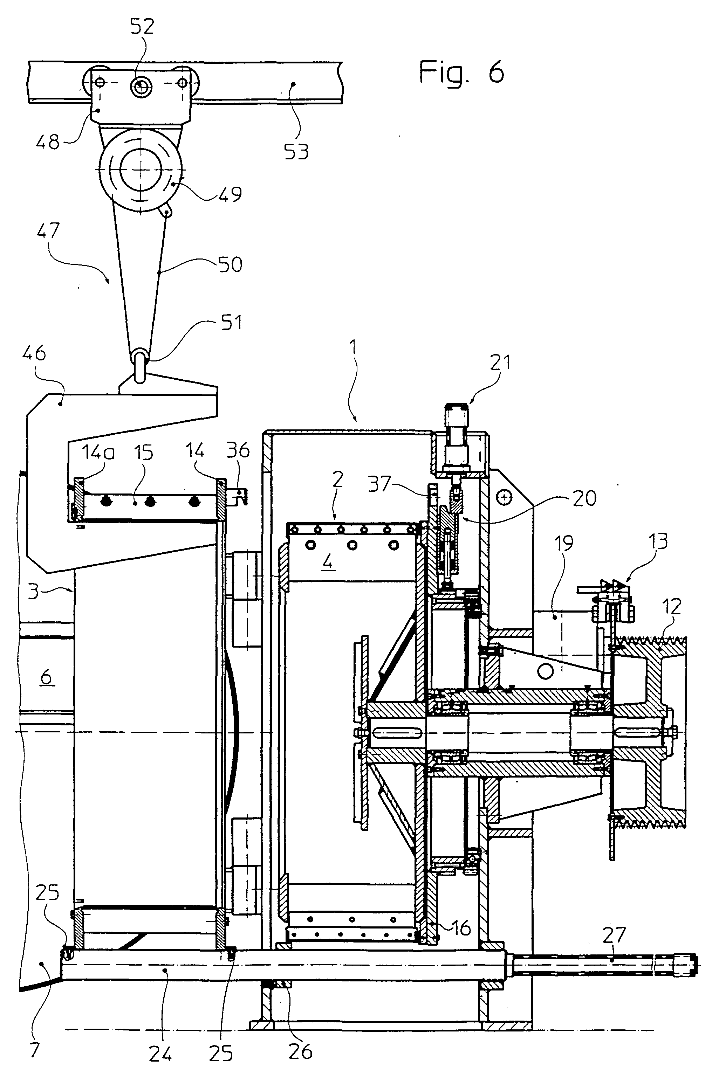

Fig. 6 schließlich zeigt den Messerkranz 3 im aus dem Maschinengehäuse 1 ausgeschobenen Zustand, wobei er noch auf den Tragstangen 24 des Ausschubschlittens 23 ruht und gerade von einem Transportbügel 46 unterfaßt wird. Dieser ist Teil einer Transporteinrichtung 47, die aus einer Laufkatze 48 mit Seilwinde 49 besteht, deren Zugseil 50 über eine am Transportbügel 46 angebrachte Seilrolle 51 geführt ist. Die Laufkatze 48 ist mittels eines Motorantriebes 52 auf einer Hängeschiene 53 verfahrbar.

Das vorprogrammierte, wartungsfreie Auswechseln eines verschlissenen Messerkranzes 3 läuft erfindungsgemäß für die beispielsweise vorstehend beschriebene Zerspanmaschine wie folgt ab:

Da mit zunehmender Stumpfheit der Spanmesser der Stromverbrauch des Antriebsmotors für den Leitschaufelrotor 2 progressiv ansteigt, schaltet bereits bei beginnendem Anstieg der Stromaufnahme der betreffende Antriebsmotor ab, wobei sich zugleich die an der Antriebsscheibe 12 vorgesehene Scheibenbremse 13 einschaltet. Desgleichen schaltet sich auch der Winkelgetriebemotor 19 für den Messerkranz 3 ab. Da dessen Betriebsdrehzahl wesentlich kleiner als die des Leitschaufelrotors 2 ist und zudem die Permanentmagnete 30, 30', die an den Druckstempeln 28 der drei an der Peripherie des Maschinengehäuses 1 installierten Druckaggregaten 21 angebracht sind, eine gewisse Bremswirkung auf den Messerkranz 3 ausüben, kommen beide Rotoren etwa zu gleicher Zeit zum Stillstand.

Während der Auslaufphase wird der Messerkranz 3 mittels spezieller Druckmedien (Luft, Wasser, Dampf) selbsttätig gereinigt.

Bei Stillstand der beiden Rotoren 2, 3 sorgen die besagten Permanentmagnete 30, 30' dafür, daß die an der Tragscheibe 16 des Messerkranzes 3 befindlichen Riegelmechanismen 22 radial exakt in Deckung mit den stationären Druckaggregaten 21 geraten.

Nun wird die Hydraulik 29 der drei Druckaggregate 21 aktiviert, wodurch deren Druckstempel 28 die Riegelkörper 31, 31' entgegen der Kraft ihrer Federn 33 radial nach innen drücken. Dabei rastet die Riegelnase 34 aus der Riegelrast 35 der Riegelbolzen 36 aus, so daß die in der Tragscheibe 16 befindlichen Abdrückfedern 41 oder alternativ die Abdrücknasen 42 an den Riegelkörpern 31' den Messerkranz 3 an drei Stellen seines Umfangs in vorteilhafter Weise gleichzeitig und gleichmäßig von seiner Tragscheibe 16 abdrücken.

Anschließend setzt der Hydraulikantrieb 27 den Schubschlitten 23 in Bewegung, auf dessen Tragstangen 24 der Messerkranz 3 bei selbsttätig geöffneter Gehäusetür 7 aus dem Maschinengehäuse 1 herausbewegt wird. Außerhalb des Maschinengehäuses wird der Messerkranz 3 von einem bereitgehaltenen Transportbügel 46 unterfaßt, der ihn programmgesteuert mittels der an der Laufkatze 48 angebrachten Seilwinde 49 auf die gewünschte Transporthöhe anhebt, bei deren Erreichen sich der Antrieb 52 der Laufkatze 48 einschaltet und den verschlissenen Messerkranz 3 längs der Hängeschiene 53 in einen separaten Raum zu seiner Instandsetzung transportiert. Dort können die einzelnen Zerkleinerungswerkzeuge, z.B. Messer, aus dem Werkzeugkranz mittels der im DE-Patent 41 14 840 vorgeschlagenen automatischen Wechselvorrichtung gegen geschärfte Messer selbsttätig ausgetauscht werden. Außerdem besteht dort die Möglichkeit, die Messer mit dem im DE-Patent 43 16 514 beschriebenen Schärfautomat im Werkzeugkranz selbst nachzuschärfen.

Inzwischen wurde ein bereitgehaltener, instandgesetzter Messerkranz 3 mittels eines zweiten Transportbügels 46 auf die Tragstangen 24 des Schubschlittens 23 so abgesetzt, daß seine Riegelbolzen 36 mit den ihnen zugeordneten Bohrungen 37 der Tragscheibe 16 etwa fluchten. Nach Aktivieren des Hydraulikantriebs 27 wird der erneuerte Messerkranz 3 auf dem Schubschlitten 23 in das Maschinengehäuse eingeschoben, wobei die Mitnehmernocken 25, insbesondere in der letzten Einschubphase, seine sichere Mitnahme gewährleisten.

Beim Eindringen der Riegelbolzen 36 in die Bohrungen 37 wird durch die konischen Gleitflächen 36' und 37' sowie 14' der Messerkranz 3 geringfügig angehoben, so daß er sich von seinem Sitz auf den Tragstangen 24 des Schubschlittens 23 löst und damit frei rotierbar wird.

Sobald die Riegelbolzen 36 die Bohrungen 37 in der Tragscheibe 16 passiert haben, werden die Druckstempel 28 der drei Druckaggregate 21 zurückgezogen, so daß die Riegelnasen 34 infolge der von den Druckfedern 33 auf die Riegelkörper 31, 31' ausgeübten Kraft in die Riegelrast 35 der Riegelbolzen 36 einrastet. Dabei bewirken die an der Riegelnase 34 und der Riegelrast 35 vorgesehenen Keilflächen 38, 39 bei ihrem Zusammenwirken während der Verriegelung an drei Umfangsstellen des Messerkranzes 3 sein gleichzeitiges und gleichmäßiges Festziehen an seiner Tragscheibe 16. Nach selbsttätigem Schließen der Gehäusetür 7 schalten sich dann die beiden Antriebsmotore wieder ein.

Die Erfindung ermöglicht somit nicht nur einen völlig wartungsfreien Betrieb von Zerkleinerungsmaschinen, sondern gewährleistet überdies auch ein beständig homogenes und qualitativ hochwertiges Zerkleinerungsprodukt bei weitgehend konstantem, optimalem Energieaufwand, ohne dabei die Produktionskapazität der Zerkleinerungsmaschine nennenswert zu beeinträchtigen.

Es versteht sich von selbst, daß die Erfindung nicht auf das beschriebene Ausführungsbeispiel eines Zerspaners mit rotierbarem Messerkranz beschränkt ist, sondern für alle Arten von Zerkleinerungsmaschinen mit verschleißträchtigen kranzförmigen Zerkleinerungswerkzeugen gilt, und zwar unabhängig davon, ob die kranzförmigen Zerkleinerungswerkzeuge rotierbar sind oder nicht.

## Patentansprüche

1. Verfahren zum Auswechseln von in einer Zerkleinerungsmaschine angeordneten Zerkleinerungswerkzeugen (5), wobei die Zerkleinerungsmaschine einen die Zerkleinerungswerkzeuge (5) tragenden Werkzeugkranz (3) umfasst, der zentriert an einem im Maschinengehäuse (1) gelagerten Tragelement (16) mit Hilfe einer Koppelungseinrichtung (20) lösbar befestigt ist und einen Schubschlitten (23) aufweist, der im Maschinengehäuse (1) gleitbar und bei geöffneter Gehäusetür (7) in Achsrichtung verschieblich ist, wobei
(a) der Werkzeugkranz (3) von seinem Tragelement (16) abkoppelt,
(b) der Werkzeugkranz (3) auf den Schubschlitten (23) nach Öffnen der Gehäusetür (7) aus dem Maschinengehäuse (1) herausbewegt wird,
(c) der Werkzeugkranz (3) gegen einen instandgesetzten Werkzeugkranz ausgetauscht wird,
(d) der Werkzeugkranz (3) nach Einschieben in das Maschinengehäuse (1) an seinem Tragelement (16) angekoppelt wird, und
(e) die Zerkleinerungsmaschine nach dem Schließen der Gehäusetür (7) anläuft,
**dadurch gekennzeichnet, dass**
(f) eine programmierte Folgesteuerung die Zerkleinerungsmaschine bei Anstieg ihres Energiebedarfs abschaltet, **dass**
(g) das An- und Abkoppeln des Werkzeugkranzes (3) mit Hilfe von über den Umfang des Werkzeugkranzes (3) verteilten Koppelungseinrichtungen (20) stattfindet, indem an der Peripherie der Zerspanungsmaschine stationär angeordnete Teile (21) der Koppelungseinrichtung (20) mit an dem Tragelement (16) angeordneten Teilen (22) der Koppelungseinrichtung (20) zusammenwirken, und dass
(h) die Verfahrensschritte (a) bis (f) selbsttätig ausgeführt werden.

2. Verfahren nach Anspruch 1, **dadurch gekennzeichnet, daß** der aus der Zerkleinerungsmaschine herausbewegte verschlissene Werkzeugkranz (3) von einem Förderelement (47) selbsttätig erfaßt wird, das ihn selbsttätig in einen separaten Raum transportiert, wo seine wirksamen Kanten (5) selbsttätig nachgeschärft werden.

3. Verfahren nach Anspruch 1 oder 2, **dadurch gekennzeichnet, dass** während der Auslaufphase der Zerkleinerungsmaschine die Zerkleinerungswerkzeuge (3, 4, 5) durch Druckmedien selbsttätig gereinigt werden.

4. Vorrichtung zur Durchführung des Verfahrens nach einem der Ansprüche 1 bis 3 bei einem Werkzeugkranz, der mit seinem inneren seitlichen Flanschring an einer im Maschinengehäuse gelagerten Tragscheibe lösbar befestigt ist, wobei am inneren Flanschring (14) des Werkzeugkranzes (3) mehrere über den Umfang verteilte, axial gerichtete, die Tragscheibe (16) in zugeordneten Bohrungen (37) durchdringende Riegelbolzen (36) angeordnet sind, in deren Riegelrast (35) hinter der Tragscheibe je eine radial bewegbare Riegelnase (34) einrastet, die Teil eines Riegelkörpers (31) ist, der an der Rückseite der Tragscheibe (16) befestigt und entgegen der Wirkung eines Kraftspeichers (33) in Radialrichtung betätigbar ist, **dadurch gekennzeichnet, dass** dem Riegelkörper (31) Druckstempel (28) zugeordnet sind, die an der Peripherie des Maschinengehäuses (1) angeordnet sind.

5. Vorrichtung nach Anspruch 4, **dadurch gekennzeichnet, daß** die Riegelnase (34) und die Riegelrast (35) des Riegelbolzens (36) mit korrespondierenden Keilflächen (38, 39) versehen sind.

6. Vorrichtung nach Anspruch 4 oder 5, **dadurch gekennzeichnet, daß** in der Tragscheibe (16) mehrere über den Umfang verteilte Ausnehmungen (40) vorgesehen sind, in denen je eine auf den inneren Flanschring (14) des Werkzeugkranzes (3) wirkende Abdrückfeder (41) angeordnet ist.

7. Vorrichtung nach Anspruch 4 oder 5, **dadurch gekennzeichnet, daß** der Riegelkörper (31') mit einer sich radial über die Riegelnase (34) erstreckenden Abdrücknase (42) versehen ist, deren schräge Gleitfläche (43) bei der Entriegelung mit einer am Riegelbolzen (36') stirnseitig angebrachten Schrägfläche (44) zusammenwirkt, wobei die Stirnfläche (45) der Abdrücknase (42) vom Druckstempel (28) radial beaufschlagbar ist.

8. Vorrichtung nach Anspruch 4 oder 5 speziell für Zerkleinerungsmaschinen mit rotierbarem Werkzeugkranz, **dadurch gekennzeichnet, daß** die an der Peripherie des Maschinengehäuses (1) angebrachten und bei Stillstand der rotierbaren Tragscheibe (16) den Riegelkörpern (31) zugeordneten Druckstempel (28) mit je einem Permanentmagneten (30, 30') versehen sind.

## Claims

1. Method for the replacement of size reduction tools (5) arranged in a rim like manner in size reduction machines, comprising a tool rim (3), carrying the size reduction tools (5) and being removably fastened in a centred way and by means of a coupling device (20) to a carrying element (16) bom in the machine housing (1) and a pulling carriage (23) being slidable in the machine housing (1) and movable in an axial direction when the housing door (7) is open, whereby
(a) the tool rim (3) is uncoupled from its carrying element (16),
(b) after opening of the door, the tool rim (3) can be moved out of the machine housing (1) on the pulling carriage (23),
(c) the tool rim (3) is replaced by an overhauled tool rim,
(d) the tool rim (3) is coupled to its carrying element (16) after having been moved into the machine housing (1),
(e) the size reduction machine starts upon closing of the housing door (7)
wherein the improvement comprises
(f) a programmed sequence control stopping the size reduction machine when the power consumption rises,
(g) the coupling and uncoupling of the tool rim (3) being done with the aid of coupling devices distributed along the circumference of the tool rim (3) by the interaction of the stationary parts (21) of the coupling devices (20) arranged on the periphery of the size reduction machine with the parts (22) of the coupling devices arranged on the carrying element (16)
(h) the process steps (a) to (f) being carried out automatically.

2. Method as claimed in claim 1 in which the wom out tool rim (3) pulled out of the size reduction machine is taken over automatically by a transport gear (47) that transports it automatically to a separate room where the active edges (5) are re-sharpened automatically.

3. Method as claimed in claim 1 or 2 in which the size reduction tools (3, 4, 5) are automatically cleaned during the slowing down phase of the size reduction machine by a media under pressure.

4. Apparatus to carry out the method according to one of the claims 1 to 3 with a tool rim which is removably fastened with its inner lateral flange ring to a carrying disc bome in the machine housing, wherein locking bolts (36) extending axially are distributed on the periphery of the inner flange (14) of the tool rim (3) and enter thereto allocated bores (37) in the carrying disc (16), a locking nose (34) movable in radial direction snapping into its catch notch (35) behind the carrying disc, each said locking nose being part of a locking unit (31) fastened on the backside of the carrying disc (16) and movable in a radial direction against the action of an energy storing device (33) by means of a plunger (28) allocated to each locking unit (31) on the periphery of the machine housing.

5. Apparatus as claimed in claim 4, in which the locking noses (34) and the catch notches (35) of the locking bolt (36) are provided with matching cuneiform surfaces.

6. Apparatus as claimed in claim 4 or 5, in which the carrying disc (16) has several recesses (40) distributed over the circumference into which respectively one forcing spring (41) acting on the inner flange ring (14) of the tool rim (3) is arranged.

7. Apparatus as claimed in claim 4 or 5, in which the locking unit (31') is provided with a forcing nose (42) extending in radial direction over the locking nose (34) and having a slanted sliding surface (43) interacting with a slanted surface (44) provided at the front of the locking bolt (36') when uncoupling, whereby the front surface (45) of the forcing nose (42) is pressed in radial direction by the plunger (28).

8. Apparatus as claimed in claim 4 or 5, especially designed for size reduction machines with rotating tool rim, in which the plungers (28) are fastened on the periphery of the machine housing and allocated to the locking units (31) at standstill of the rotating carrying disc (16), the plungers (28) being equipped each with a permanent magnet (30, 30').

## Revendications

1. Procédé pour le changement des outils de broyage (5) disposés dans une machine à broyer, laquelle comprend une couronne (3) portant les outils de broyage et fixée par des systèmes de couplage (20) déverrouillables au centre d'un support (16) logé dans le carter (1) de la machine et un chariot coulissant qui, la porte de carter (7) étant ouverte, est déplacable en direction axiale vers l'intérieur ou l'extérieur du carter de la machine et ce faisant,
(a) la couronne (3) est désaccouplée de son support (16),
(b) aprés ouverture de la porte de carter (7), la courronne (3) est sortie du carter de la machine (1) sur le chariot coulissant (23),
(c) la couronne (3) est remplaçée par une couronne remise en état,
(d) la couronne (3) est accouplée à son support (16) aprés avoir été rentrée dans le carter de la machine (1) et
(e) la machine à broyer démarre aprés fermeture de la porte de carter (7)
**caractérisé en ce**
(f) qu'un contrôle automatique à séquence arrête la machine lors de l'augmentation de la consommation énergétique
(g) que l'accouplement et le désaccouplement de la couronne (3) se fait à l'aide de systèmes de couplage répartis sur le pourtour de la couronne (3) par l'action combinée de pièces (21) fixes du système de couplage (20) disposés sur la périphérie de la machine à broyer avec les pièces (22) prévues sur le support (16) et
(h) que les étapes de procédé (a) à (f) sont effectués automatiquement.

2. Procédé selon la revendication 1, **caractérisé en ce que** la couronné (3) usée sortie de la machine à broyer est saisie automatiquement par un élément de transport (47) qui l'amène automatiquement vers un local à part où ses arêtes actives sont réaffûtées automatiquement.

3. Procédé selon la revendication 1 ou 2, **caractérisé en ce que**, lors de la phase de ralentissement de la machine à broyer, les outils de broyage (3,4,5) sont nettoyés automatiquement par un système à pression.

4. Dispositif pour la mise en oeuvre du procédé selon les revendications 1 à 3 sur une couronne dont la bride intérieure latérale est fixée de façon amovible sur un disque-support (16) et la bride intérieure (14) de la couronne (3) dispose sur son pourtour de plusieurs axes de verrouillage (36) orientés axialement et traversant le disque-support (16) au niveau d'alésages (37) correspondants et dans les encoches de verrouillage (35) desquels viennent s'enclencher les nez de verrouillage (34) qui font partie d'un organe de verrouillage (31) qui est fixé au dos du disque-support (16) et qui peut être actionné en direction radiale à l'encontre de l'action d'un accumulateur (33), **caractérisé en ce que** l'organe de verrouillage (31) se voit attribuer un tampon (28) placé sur la périphérie du carter de la machine (1).

5. Dispositif selon la revendication 4, **caractérisé en ce que** le nez de verrouillage (34) et l'encoche de verrouillage (35) de l'axe de verrouillage (36) sont pourvus de surfaces de clavettage (38, 39) correspondantes.

6. Dispositif selon la revendication 4 ou 5, **caractérisé en ce que**, sur le disque-support (16), plusieurs évidements (40) sont prévus, dans lesquels est logé respectivement un ressort de dégagement (41) qui pousse sur la bride intérieure (14) de la couronne (3).

7. Dispositif selon la revendication 4 ou 5, **caractérisé en ce que** l'organe de verrouillage (31') est pourvu d'un nez de dégagement (42) s'étendant radialement au dessus du nez de verrouillage (34) et dont, lors du déverrouillage, le plan de glissement en biais (43) interagit avec un plan en biais (44) prévu sur la face avant de l'axe de verouillage (36') et **en ce que** la face avant (45) du nez de dégagement (42) est soumise à une pression radiale exercée par le tampon (28).

8. Dispositif selon la revendication 4 ou 5 destiné particulièrement aux machines à broyer à couronne rotative, **caractérisé en ce que** les tampons (28) fixés sur la périphérie du carter de la machine (1) et alloués aux organes de verrouillage (31) lors de l'arrêt du disque-support rotatif (16), sont équipés d'aimants permanents (30, 30').
